# EUROPEAN PATENT APPLICATION

(11) **EP 2 587 684 A2**
(43) Date of publication of application: **01.05.2013**
(21) Application number: 12173929.6
(22) Date of filing: 27.06.2012
(51) Int. Cl.: H04B 5/00, H02J 17/00, H02J 7/02

(54) **Contact-less power transmitter and contact-less power transmission system**

(30) Priority: 28.10.2011 JP 2011236791
(71) Applicant: Hitachi Chemical Co., Ltd., Shinjuku-ku, Tokyo 163-0449 (JP)
(72) Inventor: Tanaka, Mayuko, Chiyoda-ku, Tokyo 100-8220 (JP); Shirosugi, Takatoshi, Chiyoda-ku, Tokyo 100-8220 (JP)
(74) Representative: Moore, Graeme Patrick

(57) **Abstract**

In a non-contact electric power transmission system that electrically charges a device in a non-contact fashion, a transmitting circuit of a contact-less power transmitter includes both an excitation element and a resonance element, both corresponding to one of storage pockets, and transmits electric power from a specified storage pocket under a control signal from a transmission controller. At this time, the transmission controller, upon insertion of an obj ect being detected in a storage detector, uses information from an output detector to determine the object to be a destination device to which the power is to be transmitted, and controls the corresponding transmitting circuit to transmit the power. For example, the information from the output detector includes either a transmission rate associated with contact-less power transmission, or a differential between a load modulation period of the contact-less power receiver and that of the contact-less power transmitter. In addition, the transmission controller acquires charge information on the contact-less power receiver inserted in one of the storage pockets and controls the power transmission of the transmitting circuit. This simplifies a structure of the device to be charged in the contact-less power transmission system for non-contact device charging, and reduces the device in dimensions and weight.

## Description

### BACKGROUND OF THE INVENTION

The present invention relates generally to contact-less power transmitters and contact-less power transmission systems. More particularly, the invention concerns a contact-less power transmitter and contact-less power transmission system suitable for miniaturizing, as well as electrically charging, electronic devices such as 3D glasses used to view digital TVs.

Nowadays, popular types of portable terminals, cameras, personal computers, and other hand-held electronic devices have a rechargeable battery, which can be repeatedly used if recharged. Through a battery charger, also called an AC adapter, these electronic devices convert home-use alternating-current power into direct-current power and use an internal charging circuit of the electronic device to re-energize the rechargeable battery contained in the device.

In addition, 3D glasses of an active shutter type operating synchronously with 3D video signals of a 3D TV are available in a new field. These 3D glasses open and close shutters of respective liquid crystals in synchronization with a synchronizing signal sent from the TV. The 3D glasses provide a stereoscopic effect by receiving a left-eye-dedicated video signal with a left-eye lens and receiving a right-eye-dedicated video signal with a right-eye lens. The 3D glasses need electric power to open and close the shutters of the liquid crystals, and thus require recharging for repeated use.

In such a conventional manner of charging 3D glasses, however, repeating AC adapter connection to and disconnection from a connector of the hand-held electronic device has been a troublesome task to the user and has been liable to damage the connector section. Additionally, differences in electrical standards between hand-held electronic devices have made it necessary to provide a special AC adapter for each hand-held electronic device, and hence posed a problem in that placement of various AC adapters around power outlets renders management of the adapters troublesome.

In order to avoid these problems, a charging scheme, called non-contact charging or contact-less power transmission, is known to exist. In the non-contact charging scheme, a power transmitter that supplies power, and a power receiver subjected to charging are able to respectively transmit and receive charging power without electrical metal contacts or connector interconnections, in a wireless manner based on electromagnetic induction.

For non-contact charging, it is desirable that the device to be charged should be identified at the power transmitter side to prevent malfunctioning and/or to ensure that the device is charged under optimal charging conditions.

For this reason, Japanese Patent Application Publication JP-2010-178498-A discloses a technique for providing a communications unit at both of a charging-power supply side such as a cell phone or digital camera, and a charging-power receiving side for charging. In the technique, the charging device can identify the device to be charged by communicating therewith and provide charging under optimal charging conditions.

The technique described in JP-2010-178498-A has had problems in that the charging device needs to have the communications unit for identifying and communicating with the device subjected to charging, and in that the communications unit needs to have a communications control unit for transmitting data necessary for power control. Providing the communications unit and control unit for the charging process, however, is undesirable in perspective of simplifying device structures for reduced dimensions, weights, and prices.

For the above 3D glasses of the active shutter scheme, in particular, it is strongly requested to simplify their structures since a plurality of sets must be required in a case that a plurality of viewers are present for one TV, and since 3D glasses of the active shutter scheme tend to be complex in structure, compared with 3D glasses of polarizing schemes.

The present invention has been made with a view to solving the above problems, and an object of the invention is to provide a contact-less power transmission system used for non-contact electrical charging of devices. This system uses a charging-power supply device to control electric power as well as to identify devices to be charged, and has a power control capability. In addition, the system contributes to simplifying a structure of the devices to be charged as well as to reducing each of those devices in dimensions and weight.

### SUMMARY OF THE INVENTION

A contact-less power transmission system according to a configuration of the present invention includes a contact-less power transmitter and at least one contact-less power receiver. For example, the contact-less power transmitter is a digital TV that displays 3D images, and the at least one contact-less power receiver is 3D glasses of an active shutter scheme, used for viewing the 3D images that the digital TV displays.

The contact-less power transmitter includes a transmitting circuit for transmitting electric power to the at least one contact-less power receiver in non-contact fashion, at least one storage pocket for accommodating the contact-less power receiver, a storage detector for detecting insertion of an object into the at least one storage pocket, an output detector for determining whether the object that has been inserted into the storage pocket is the contact-less power receiver to which the power is to be transmitted, and a transmission controller for controlling the transmission of the power from the transmitting circuit; wherein the transmitting circuit is a device that includes an excitation element and a resonance element, both corresponding to the storage pocket, and under a control signal from the transmission controller, transmits the power from the storage pocket specified by the transmission controller.

The transmission controller, upon the storage detector detecting the insertion of the object, uses the output detector to determine whether the object is the contact-less power receiver to which the power is to be transmitted, and upon the object being determined to be the contact-less power receiver, controls the transmitting circuit to transmit the power from the corresponding storage pocket.

In that case, the transmission controller instructs only the transmitting circuit of the corresponding storage pocket to transmit the power, and instructs the transmitting circuits of all other storage pockets to stop power transmission.

Methods of determining whether the object is the contact-less power receiver to which the power is to be transmitted are outlined below. In one method, the output detector measures, for a predetermined time, a second period of load modulation induced at the transmitting circuit side as a result of the load modulation of a load modulator in the contact-less power receiver. In the meantime, the transmission controller calculates a difference between a first period of the load modulator and the second period of the load modulation in the transmitting circuit corresponding to the storage pocket containing the object whose insertion was detected, and if the difference is smaller than a predetermined reference value, determines that the object whose insertion was detected is the device to which the power is to be transmitted.

In another method, the transmission controller acquires both the amount of incident power, measured by the output detector as the amount of power admitted from the contact-less power transmitter into the contact-less power receiver, and the amount of reflected power returned from the contact-less power receiver to the contact-less power transmitter, then calculates a rate of the amount of incident power to the amount of reflected power, as a transmission rate, and if the transmission rate is greater than a predetermined reference value, determines that the object whose insertion was detected is the device to which the power is to be transmitted.

In addition, the transmission controller acquires information on a charge state of the contact-less power transmitter inserted within the storage pocket, and controls the power transmission of the transmitting circuit in accordance with the acquired information.

At this time, the transmission controller instructs only the transmitting circuit of the corresponding storage pocket to transmit the power, and instructs the transmitting circuits of all other storage pockets to stop power transmission.

Methods of controlling the power transmission of the transmitting circuit according to the particular charge state of the contact-less power transmitter are outlined below. In one method, the transmission controller calculates the difference between the second period of the load modulation in the transmitting circuit instructed to transmit the power, and the first period of the load modulation in the contact-less power receiver, then if the difference is not smaller than the predetermined reference value, determines that charging of the contact-less power receiver in the storage pocket corresponding to the transmitting circuit has been completed, and stops the power transmission of the transmitting circuit.

In another method, the transmission controller acquires both the amount of incident power, measured by the output detector as the amount of power admitted from the contact-less power transmitter into the contact-less power receiver, and the amount of reflected power returned from the contact-less power receiver to the contact-less power transmitter, then calculates the rate of the amount of incident power to the amount of reflected power, as the transmission rate, and if the transmission rate is not greater than the predetermined reference value, determines that the charging of the contact-less power receiver inserted in the storage pocket corresponding to the transmitting circuit has been completed, and stops the power transmission of the transmitting circuit.

### BRIEF DESCRIPTION OF DRAWINGS

Fig. 1 is a conceptual diagram of a contact-less power transmission system configuration according to a first embodiment of the present invention;
Fig. 2 is a block diagram showing a configuration of various elements constituting the contact-less power transmission system according to the first embodiment of the present invention;
Fig. 3 is a block diagram that shows circuit composition of an output detector;
Fig. 4 is a block diagram that shows circuit composition of a transmitting circuit in a digital TV and that of a receiving circuit in 3D glasses;
Fig. 5 is a diagram showing an example of a transmission management table;
Fig. 6 is a flowchart of a process which a contact-less power transmitting block conducts to start transmitting electric power;
Fig. 7 is a flowchart showing a determining process relating to a power transmission destination device;
Fig. 8 is a flowchart showing a charging completion detection process;
Fig. 9 is a flowchart showing a charge state determining process conducted in the first embodiment;
Fig. 10 is a diagram showing a signal waveform of a voltage which the output detector outputs to calculate a load modulation period T;
Fig. 11 is a flowchart showing a process of detecting removal of a device from a storage pocket;
Fig. 12 is a flowchart showing a process of detecting an unusual temperature in the contact-less power transmitting block;
Fig. 13 is a flowchart showing a charge state determining process conducted in a second embodiment;
Fig. 14 is a block diagram showing a configuration of various elements constituting a contact-less power transmission system according to the second embodiment of the present invention;
Figs. 15A-15C are diagrams that show examples of a screen for displaying a charge states to a user;
Fig. 16 is a flowchart of a process by an image signal receiving/reproducing block which displays a state of 3D glasses on a display device in response to 3D image receiving; and
Fig. 17 is a diagram showing an example of a screen for presenting a charge state of the 3D glasses to the user during 3D image is displayed on a digital TV.

### DESCRIPTION OF THE PREFERRED EMBODIMENTS

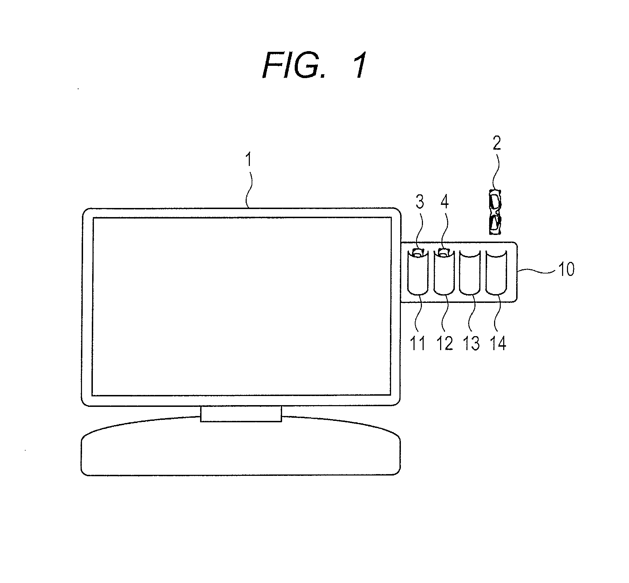

Hereunder, embodiments of the present invention will be described referring to Figs. 1 to 17.

### First Embodiment

A contact-less power transmission system according to a first embodiment of the present invention is described below referring to Figs. 1 to 12.

In the description of the present embodiment, a digital television (DTV) capable of displaying 3D content is taken as an example of a contact-less power transmitter. In addition, a contact-less power transmission system including 3D glasses of an active shutter type that receive a synchronizing signal from the digital TV and open and close liquid-crystal shutters of left and right lenses in synchronization with the TV, is taken as an example of a contact-less power receiver. The present embodiment assumes that a plurality of pairs of 3D glasses exist as contact-less power receivers not subjected to charging.

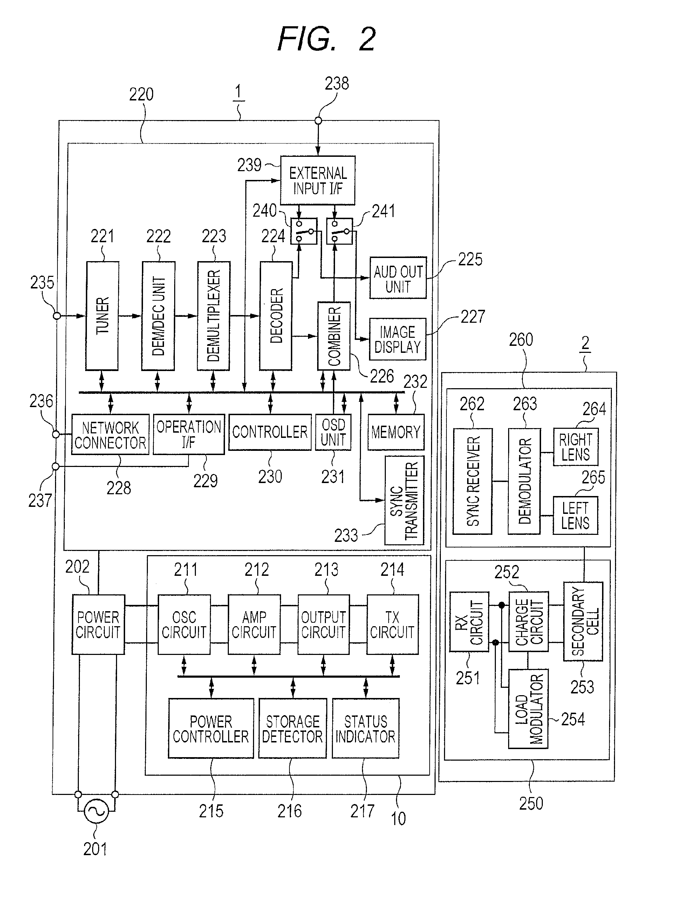

First, a configuration of the contact-less power transmission system according to the first embodiment of the present invention is described below referring to Figs. 1 and 2.

Fig. 1 is a conceptual diagram showing the contact-less power transmission system configuration according to the first embodiment of the present invention.

Fig. 2 is a block diagram showing a configuration of various elements constituting the contact-less power transmission system according to the first embodiment of the present invention.

As shown in Fig. 1, the contact-less power transmission system of the present embodiment includes a digital TV that can display 3D content as a contact-less power transmitter, and three pairs of 3D glasses, 2, 3, 4 as examples of contact-less power receivers.

The systemwould include wireless headphones, microphones, or the like, as other examples of contact-less power receivers.

The digital TV 1 includes a contact-less power transmitting block 10 that accompanies storage pockets 11, 12, 13, 14 for storage of a plurality of pairs of 3D glasses. The four storage pockets are only shown as an example in the present embodiment. The contact-less power transmitting block 10 can be housed inside or on a rear panel of the digital TV 1. The contact-less power transmitting block 10 in a pulled-out condition is shown in Fig. 1. Two of the four pairs of 3D glasses, namely the pairs 3 and 4, not used for viewing, usually remain stored within the pockets 11 and 12, respectively, as shown in Fig. 1.

As described above, the digital TV 1 includes the contact-less power transmitting block 10, which has both a function that transmits electric power in non-contact form to, and electrically charges, the 3D glasses pairs 2, 3, 4, and a function that accommodates the 3D glasses pairs 2, 3, 4.

As shown in Fig. 2, the digital TV 1 includes a power supply block 201, a power circuit block 202, and an image signal receiving/reproducing block 220, in addition to the contact-less power transmitting block 10.

The contact-less power transmitting block 10, a section that detects storage of the 3D glasses 2 into a storage pocket and transmits power to the 3D glasses 2, is driven by the power transmitted from the power circuit block 202.

As shown in Fig. 2, the contact-less power transmitting block 10 is constituted essentially by an oscillating circuit 211, an amplifying circuit 212, an output detector 213, a transmitting circuit 214, a transmission controller 215, a storage detector 216, and a status indicator 217.

The oscillating circuit 211 transmits a power transmission signal at a desired frequency to transmit power. An output signal from the oscillating circuit 211 is transmitted to the amplifying circuit 212. Oscillation in the oscillating circuit 211 uses a Colpitts oscillator, for example.

The amplifying circuit 212 amplifies the power that is output from the oscillating circuit 211. An output signal from the amplifying circuit 212 is transmitted to the transmitting circuit 214 via the output detector 213, thereby supplying power to the transmitting circuit 214.

The output detector 213 detects an output state of power in the contact-less power transmitting block 10. Details of the output detector 213 will be described later herein.

The transmitting circuit 214 transmits power to the 3D glasses 2 by generating a magnetic field from the power that has been supplied from the amplifying circuit 212. Details of the transmitting circuit 214 will be described later herein.

The transmission controller 215 controls the elements that constitute the contact-less power transmitting block 10. The transmitting controller 215 controls operation of the entire contact-less power transmitting block 10 by, for example, determining, from the amount of power that the output detector 213 has detected, whether an object that has been inserted into a storage pocket is the 3D glasses 2 to which the power is to be transmitted, and whether electrical charging of the 3D glasses 2 has been completed.

The storage detector 216 detects the insertion of objects into and removal of the objects from storage pockets. The storage detector 216 detects object insertion into and removal from each storage pocket individually and outputs appropriate information according to the insertion/removal of the object. For example, the detection uses a push switch constructed so that weight of the inserted object changes the switch from an 'off' state to an 'on' state. The push switch is disposed in each storage pocket so as to detect individual insertion or removal. An infrared sensor or other equivalent means may instead be used to detect storage.

The status indicator 217 is a visual indicator that notifies to a user, for example, a status of power transmission to the 3D glasses 2 which has been inserted in the storage pocket, the notification being based on the control of the transmission controller 215. The visual indication of the status (state) is represented by, for example, a light-emitting state of a light-emitting diode (LED) or a color of the light emitted. At this time, an individual status is indicated for each storage pocket.

The power supply block 201 is a section that acts as a power supply to provide the power required for the digital TV 1 to operate. This power supply is, for example, an commercial-use alternating-current (AC) power supply or a direct-current (DC) power supply obtained by solar power generation.

The power circuit block 202 generates electric power to drive various sections of the digital TV 1, the power being supplied from the power supply block 201. If the power supplied from the power supply block 201 is AC power, the power circuit block 202 rectifies and smoothes the power into a DC voltage and then further converts the voltage into a predetermined voltage before transmitting this voltage to each section. Rectification and smoothing are not required if the supplied power is DC. Supply of the DC power from the power circuit block 202 to the contact-less power transmitting block 10 and the image signal receiving/reproducing block 220 is controlled for each of the two blocks independently. Even if the image signal receiving/reproducing block 220 is powered off by remote control operations, for example, the power is supplied to the contact-less power transmitting block 10, holding this block in a ready state for transmitting power. The system may be configured to control the supply of DC power so that when the contact-less power transmitting block 10 is not transmitting power, the DC power will only be supplied to the storage detector 216, and so that when an object is inserted into a storage pocket, the insertion will be a trigger for the DC power to be supplied to the entire image signal receiving/reproducing block 220. In this case, even if the image signal receiving/reproducing block 220 is powered off, power transmission will be continued, which will in turn be effective for reducing electric power consumption during stand-by.

The image signal receiving/reproducing block 220 implements a digital TV function of the digital TV 1. The image signal receiving/reproducing block 220 is also driven by the power supplied from the power circuit block 202.

As shown in Fig. 2, the image signal receiving/reproducing block 220 includes a tuner 221, a demodulator/decoder (DEM/DEC) 222, a demultiplexer (DEMUL) 223, a decoder 224, an audio output (AUD OUT) unit 225, a combiner 226, an image display 227, a network connector 228, a device interface (I/F) 229. image signal receiving/reproducing block 220 further includes a controller 230, an OSD unit 231, a memory 232, a synchronous transmitter 233, an antenna connector terminal 235, a network terminal 236, a device signal receiver 237, an external input terminal 238, an external input interface (I/F) 239, and switches 240, 241.

The tuner 221 receives a digital broadcasting wave via the antenna connector terminal 235 and selects a station. The tuner 221 extracts a channel frequency band of a channel signal to be received, and outputs the extracted signal as a baseband signal to the demodulator/decoder 222 by quadrature demodulation.

The demodulator/decoder 222 decodes the baseband signal into a digital broadcasting signal by synchronous demodulation. More specifically, the demodulator/decoder 222 conducts synchronous demodulation based on, for example, 8PSK (Octonary Phase-Shift Keying), and after decoding the baseband signal into a digital broadcasting signal by providing error correction such as Viterbi decoding or Reed-Solomon decoding, outputs the signal to the demultiplexer 223. An example in which an MPEG2-TS signal that has been compressed and encoded in the MPEG (Moving Picture Experts Group) scheme and then multiplexed in the TS (Transport Stream) scheme is handled as the digital broadcasting signal is described below.

The demultiplexer 223isasect ion that separates/extracts, from the multiplexed MPEG2-TS signal, a signal that will be used at a stage that follows. After separating/extracting from the multiplexed MPEG2-TS signal the signal that will be used at the stage that follows, the demultiplexer 223 outputs either of the following to the decoder 224: a video signal and audio signal constituting a certain kind of content such as a broadcast program; or a signal stream of a caption (or subtitles), such as PES (Packetized Elementary Stream) or ES (Elementary Stream) ; or a data broadcast.

The decoder 224 decodes the PES or ES of the audio signal that the demultiplexer 223 has separated/extracted, and outputs the decoded signal components to the audio output unit 225. The decoder 224 also decodes the PES or ES of the video signal and outputs the decoded signal components to the combiner 226.

The audio output unit 225 is a section, such as a speaker, that outputs as a sound the audio signal which the decoder 224 decoded.

The combiner 226, by combining the signals that have been input from the decoder 224 and the OSD unit 231, forms a display screen and outputs the combined signals to the image display 227.

The image display 227 is, for example, a liquid-crystal display, which displays the video signal that is decoded by the decoder 224.

The network connector 228 includes a communications processing unit and a transmission content protection unit, and the connector 228 exchanges data and content with other network-connected devices not shown, a network-connected server, and the like, via the network terminal 236.

The device I/F 229 receives an input signal from an operating device not shown, via the device signal receiver 237, and processes the input signal. The operating device here is, for example, a remote control unit, a mouse, a keyboard, a touchscreen (panel), or the like. While the device signal receiver 237 directly receives the input signal from the operating device, the receiver 237 may instead use infrared wireless means to receive the operating device input signal or use a connector terminal to receive the input signal. In the latter case, the operating device would be connected via a connector terminal.

The controller 230 executes an operating system (OS) and application programs and controls various system elements to activate the image signal receiving/reproducing block 220.

The OSD unit 231, under the control of the controller 230, generates a user interface screen and the like of an application program and outputs the user interface screen to the combiner 226.

The memory unit 232 is a section for program and data storage. The memory unit 232 includes a volatile memory and a non-volatile memory. The non-volatile memory holds the OS, application programs, and other software required for the activation of the image signal receiving/reproducing block 220, and the volatile memory temporarily holds data necessary for the software to operate.

The synchronous transmitter 233 generates and outputs a synchronizing signal that controls the liquid-crystal shutters of the 3D glasses of the active shutter type when 3D content is reproduced. The synchronizing signal is output using infrared radiation, for example.

The external input terminal 238 is a terminal for connecting an external device such as a recorder, player, or set-top box (STB). Non-compressed video and audio signals or compressed video and audio signals, control signals, and other signals are input from the external device not shown, to the external input terminal 238. The control signals are input from the external device, and can also be output thereto. The external input terminal 238 complies with, for example, the HDMI (High-Definition Multimedia Interface (registered trademark) standards or the DisplayPort (registered trademark) standards. The input signals are output to the external input I/F 239. The video and audio signals are output from the external input I/F 239 via the switches 240, 241 to the image display 227 and the audio output unit 225, and provided to the user.

The external input I/F 239 receives and processes an external input signal supplied from the external input terminal 238. Each video signal is output from the external input I/F 239 to the switch 241, and each audio signal is output from the I/F 239 to the switch 240. Other signals such as the control signals are output to the controller 230.

The switch 240 switches the kind of audio signal to be input to the audio output unit 225. More specifically, the switch 240 selects either the audio signal that has been input from the external input I/F 239, or the audio signal that has been decoded by the decoder 224.

The switch 241 switches the kind of video signal to be input to the image display 227. More specifically, the switch 241 selects either the video signal that has been input from the external input I/F 239, or the video signal that has been decoded by the decoder 224. The controller 230 controls switching of the switches 240, 241.

The 3D glasses 2 include a contact-less power receiving block 250 and an optical operating block 260, as shown in Fig. 2.

The contact-less power receiving block 250 receives the electric power transmitted from the digital TV 1, and supplies power for driving the optical operating block 260.

The contact-less power receiving block 250 includes a receiving circuit 251, a charging circuit 252, a secondary battery 253, and a load modulator 254.

The receiving circuit 251 receives electric power from the contact-less power transmitting block 10 and then outputs the power to the charging circuit 252. Details of the receiving circuit 251 will be described later herein.

The charging circuit 252 charges the secondary battery 253 using a DC voltage supplied from the receiving circuit 251. The charging circuit 252 also has a function that detects whether the secondary battery 253 has become fully charged. That is to say, if the secondary battery 253 is fully charged, the charging circuit 252 stops the output of the DC voltage to the secondary battery 253 to avoid its overcharging and thus to prevent it from being electrically damaged.

The load modulator 254 provides load modulation at predetermined periods while electric power is supplied from the charging circuit 252 to the secondary battery 253. The load modulation changes the amount of load power applied from the 3D glasses 2 to the digital TV 1, and thus enables the output detector 213 of the digital TV 1 to detect whether the 3D glasses 2 are currently being charged or have been charged to completion. The charge state detection based on the load modulation will be detailed later herein.

The secondary battery 253 is a power supply that drives the optical operating block 260.

The optical operating block 260 provides a function that allows the user to view the 3D content displayed on the digital TV 1 having a 3D content display capability.

The optical operating block 260 includes a synchronous receiver 262, a demodulator 263, a right lens 264, and a left lens 265.

The synchronous receiver 262 receives the synchronizing signal for controlling the liquid-crystal shutters, and then outputs the synchronizing signal to the demodulator 263. The synchronizing signal is output from the synchronous transmitter 233 of the digital TV 1 by means of infrared radiation.

The demodulator 263 demodulates the received synchronizing signal and after generating a liquid-crystal shutter control signal, outputs the shutter control signal to the right lens 264 and the left lens 265.

The 3D glasses pairs 3, 4 are also of the same configuration as that of the 3D glasses pair 2.

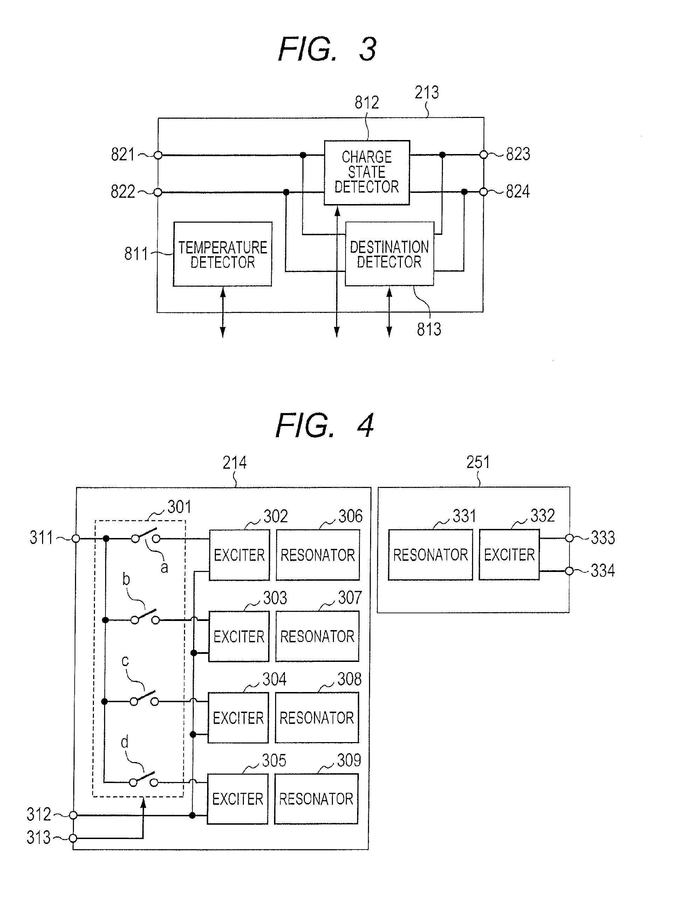

Next, the contact-less power transmitting block 10 of the digital TV 1 in the contact-less power transmission system according to the first embodiment of the present invention, and sections of the system that relate to electric power transmission between the 3D glasses are described below referring to Figs. 3 and 4.

Fig. 3 is a block diagram that shows circuit composition of the output detector 213.

Fig. 4 is a block diagram that shows circuit composition of the transmitting circuit 214 in the digital TV 1 and that of the receiving circuit 251 in the 3D glasses 2.

The output detector 213 of the contact-less power transmitting block 10 includes a temperature detector 811, a charge state detector 812, and a power transmission destination (device) detector 813, as shown in Fig. 3.

The temperature detector 811 monitors a temperature of the amplifying circuit 212, determines whether the temperature is normal or unusually high, and outputs result information to the transmission controller 215.

The charge state detector 812 is a circuit that detects the charge state of the 3D glasses 2. An output signal from the charge state detector 812 is sent to the transmission controller 215, which then determines the charge state. The charge state detector 812 is composed of a load change demodulation circuit that demodulates a load voltage value into a binary state. For example, depending on whether the load voltage value is greater than or smaller than a predetermined threshold value, the load voltage value is demodulated into a high (H) level or a low (L) level, respectively. A period of H or L that is an output value of the load change demodulation circuit becomes a value associated with a period of the load modulation of the load modulator 254 in the 3D glasses 2. When non-contact charging of the 3D glasses 2 by power transmission from the contact-less power transmitting block 10 is highly effective (i.e., if the secondary battery 253 of the 3D glasses 2 is not much charged), the period of the load modulation output signal from the charge state detector 812 is close to the load modulation period of the load modulator 254 in the 3D glasses 2. When non-contact charging of the 3D glasses 2 by power transmission from the contact-less power transmitting block 10 is not occurring (i.e., if the secondary battery 253 of the 3D glasses 2 has been charged), the load modulation output signal from the charge state detector 812 undergoes no oscillation. A relationship between the period of the load modulation output signal from the charge state detector 812 and the load modulation period of the load modulator 254 in the 3D glasses 2 will be described in further detail later herein.

The transmission destination detector 813 is a circuit that detects whether the object that has been inserted in the storage pocket is the device to which the power is to be transmitted, that is, the 3D glasses 2, or a device to which the power is not to be transmitted. The transmission destination detector 813 is composed using, for example, a reflection quantity measuring circuit that measures the amount of power supplied to the 3D glasses 2 as the incident power entering it, and the amount of power returned as reflected power from the supply destination, and then outputs the measured values to the transmission controller 215. If the device to which the power is to be supplied is the 3D glasses 2, the amount of power reflected will be small because of a design not causing a transmission loss. If the device to which the power is to be supplied is an object other than the 3D glasses 2, that is, if the supply destination is not a device to which the power is to be transmitted, the amount of power reflected will be large. The transmission controller 215, therefore, calculates a transmission rate from the measured amounts of incident power and reflected power (transmission rate = the amount of incident power/the amount of reflected power) and if the transmission rate is greater than a predetermined reference value, determines the supply destination to be the 3D glasses 2.

Connector terminals 821, 822 are terminals for connection to the amplifying circuit 212. In addition, connector terminals 823, 824 are terminals for connection to the transmitting circuit 214.

Next, the sections (system elements) relating to power transmission from the contact-less power transmitting block 10 of the digital TV 1 to the contact-less power receiving block 250 of the 3D glasses 2 are described below per Fig. 4.

As shown in Fig. 4, the transmitting circuit 214 in the contact-less power transmitting block 10 is composed essentially of a switch section 301, excitation elements 302, 303, 304, 305, resonance elements 306, 307, 308, 309, connector terminals 311, 312, and a switch control terminal 313.

The receiving circuit 251 in the contact-less power receiving block 250 of the 3D glasses 2 is composed essentially of a resonance element 331, an excitation element 332, and connector terminals 333, 334.

The switch section 301 of the transmitting circuit 214 is controlled by a control signal that is input to the switch control terminal 313. The transmission controller 215 outputs the control signal. The control signal can conduct 'on' (connection) control and 'off' (disconnection) control upon each of switches "a", "b", "c", and "d" individually.

The excitation elements 302, 303, 304, 305 are each connected to the output detector 213 via the switch section 301. When the switch connected to either excitation element is on, an alternating current by the oscillation in the oscillating circuit 211 and then the amplification in the amplifying circuit 212 is supplied, which then induces a current in a resonance element. Referring to Fig. 4, the excitation element 302 becomes magnetically coupled to the resonance element 306. Similarly, the excitation element 303 becomes magnetically coupled to the resonance element 307, the excitation element 304 to the resonance element 308, and the excitation element 305 to the resonance element 309.

The resonance element 331 in the 3D glasses 2 is placed in a position where, when the 3D glasses 2 are inserted into a storage pocket, a relationship of magnetic resonance will be established with respect to a resonance element of the transmitting circuit 214 in the contact-less power transmitting block 10. For example, if the 3D glasses 2 are inserted into the storage pocket 11, the resonance element 331 and the resonance element 306 will have the resonance relationship. Similarly, the appropriate resonance element to which the resonance element 331 will have the resonance relationship will be determined according to the storage pocket into which the 3D glasses 2 have been inserted. Insertion into the storage pocket 12 will establish the resonance relationship with respect to the resonance element 307, insertion into the storage pocket 13 will establish the resonance relationship with respect to the resonance element 308, and insertion into the storage pocket 14 will establish the resonance relationship with respect to the resonance element 309.

The description below is given taking the example of inserting the 3D glasses 2 into the storage pocket 11, as shown in Fig. 4. In this example, since the resonance element 331 and the resonance element 306 will have the resonance relationship, vibration of a magnetic field generated by a resonance frequency as a result of the alternating current having been supplied to the resonance element 306 will be transmitted to the resonance element 331, thereby generating an alternating current in the resonance element 331. The resonance element 331 and the excitation element 332 will be magnetically coupled to each other. The alternating current that has been generated in the resonance element 331 will therefore induce a current in the resonance element 332 and supply the current to the charging circuit 252 connected via the connector terminals 333, 334.

More specifically, the excitation elements 302, 303, 304, 305, the excitation element 332, the resonance elements 306, 307, 308, 309, and the resonance element 331 each include, for example, an air-core coil formed by winding a conductor.

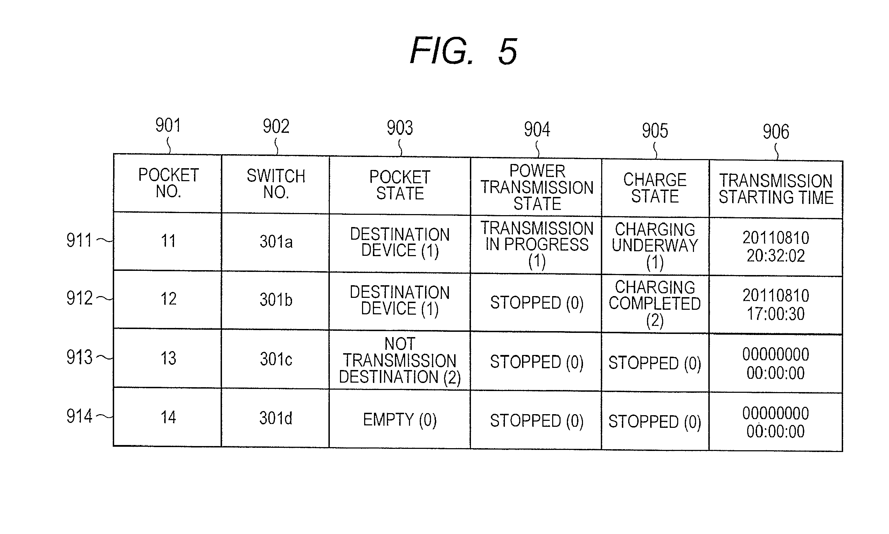

Next, a data structure used for the transmission controller 215 of the contact-less power transmitting block 10 to control power transmission is described below referring to Fig. 5.

Fig. 5 is a diagram showing an example of a transmission management table.

The transmission management table is a table for storage of management information which the transmission controller 215 manages and retains.

As shown in Fig. 5, the transmission management table includes fields such as a Pocket No. (storage pocket number) 901, Switch No. (switch number) 902, Pocket state 903, Power transmission state 904, Charge state 905, and Transmission starting time 906. The transmission controller 215 refers to the information, acquires an identification number of a switch to be turned on for power transmission via a desired storage pocket, and manages a power transmission state for each storage pocket.

The Pocket No. 901 is a field for storage of an identifier which identifies a storage pocket. In the example of Fig. 5, the reference numbers of each storage pocket, shown in Fig. 1, are assigned as values of the storage pocket numbers.

The Switch No. 902 is a field that indicates the switch for inducing a current in the resonance element corresponding to the storage pocket. The example of Fig. 5 assumes that numbers, such as "301a", are each assigned by combining the reference number of the switch section that is shown in Fig. 4, and the reference number of one switch that is also shown in Fig. 4. That is to say, referring to the value of the field allows the user to know that to transmit power to the storage pocket 11, since the value of the Switch No. 902 is 301a, the switch section 301 only needs to be controlled to turn on the switch "a" thereof.

Values that the system has set beforehand are assigned to the Pocket No. 901 and the Switch No. 902, and the values are not updated by the transmission controller 215.

The Pocket state 903 is a field for storage of a value indicating an object storage state of the storage pocket. For example, an empty state of the storage pocket as containing nothing inside it is expressed by a value "0", a state of the pocket as internally containing the 3D glasses 2 or some other power transmission destination device is expressed by a value "1", and a state of the pocket as internally containing an object other than the transmission destination device is expressed by a value "2".

The Power transmission state 904 is a field indicating a state of power transmission to the storage pocket specified by the Pocket No. For example, if transmission is in a stopped state, that is, if power is not being transmitted to the pocket, this state is expressed by a value "0", or if power is being transmitted (transmission in progress), this state is expressed by a value "1".

The Charge state 905 is a field for storage of a value indicating a charge state. Referring to Fig. 5, by way of example, a stopped state in which the pocket is not being charged is expressed by a value "0", a state in which the pocket is being charged is expressed by a value "1", a state in which the charging of the pocket is or has been completed is expressed by a value "2", or a state in which a charging error is occurring or has occurred is expressed by a value "3".

The Transmission starting time 906 is a field for indicating a starting date and time of power transmission. The starting date/time is expressed in a format of YYYYMMDDhh:mm:ss as an example. The date/time recorded will indicate when the transmission destination device was inserted into the storage pocket and transmission to the destination device was started. In all other cases, values of both the date and the time are cleared to zero.

In the example of Fig. 5, a first record 911 indicates that the storage pocket 11 contains the 3D glasses 3, that power is being transmitted, and that the glasses 3 are being charged. Likewise, a second record 912 indicates that the storage pocket 12 contains the 3D glasses 4 and that charging is completed and power transmission is stopped, and a third record 913 indicates that since the storage pocket 13 contains an obj ect, not 3D glasses, that is other than a power transmission destination device, power transmission is stopped. A fourth record indicates that since the storage pocket 14 is empty, power transmission is stopped.

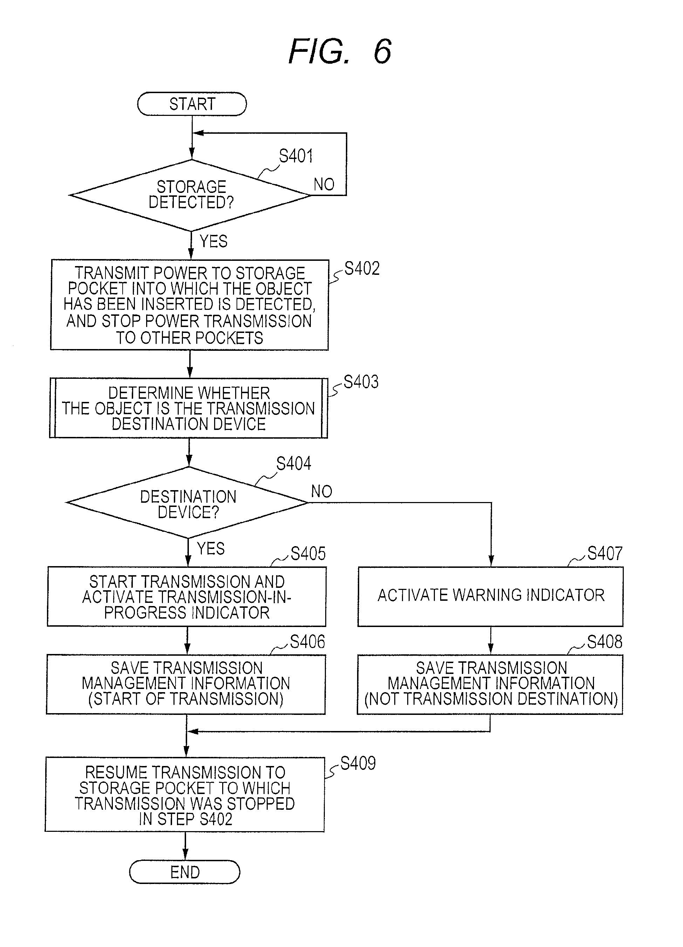

Next, processing in the contact-less power transmitting block 10 is described below referring to Figs. 6 to 12.
Fig. 6 is a flowchart of the process which the contact-less power transmitting block 10 conducts to start transmitting electric power.

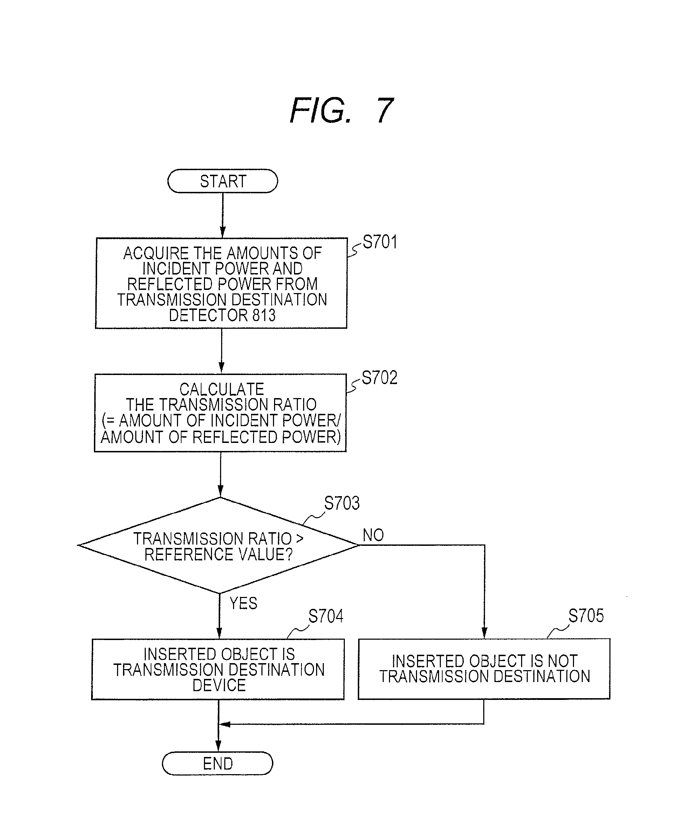

Fig. 7 is a flowchart showing the determination process relating to a power transmission destination device.

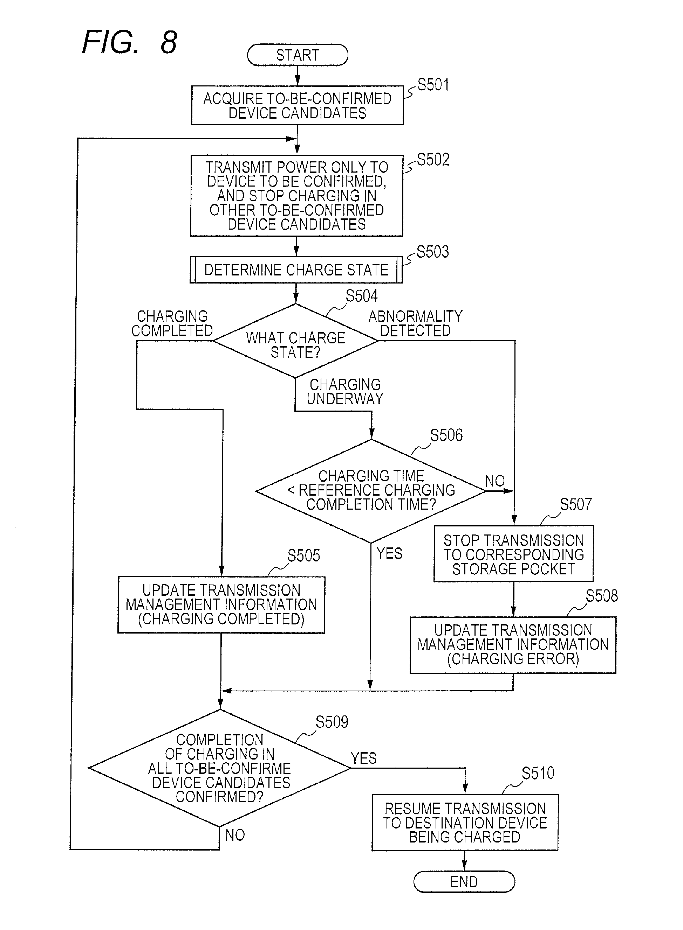

Fig. 8 is a flowchart showing a charging completion detection process.

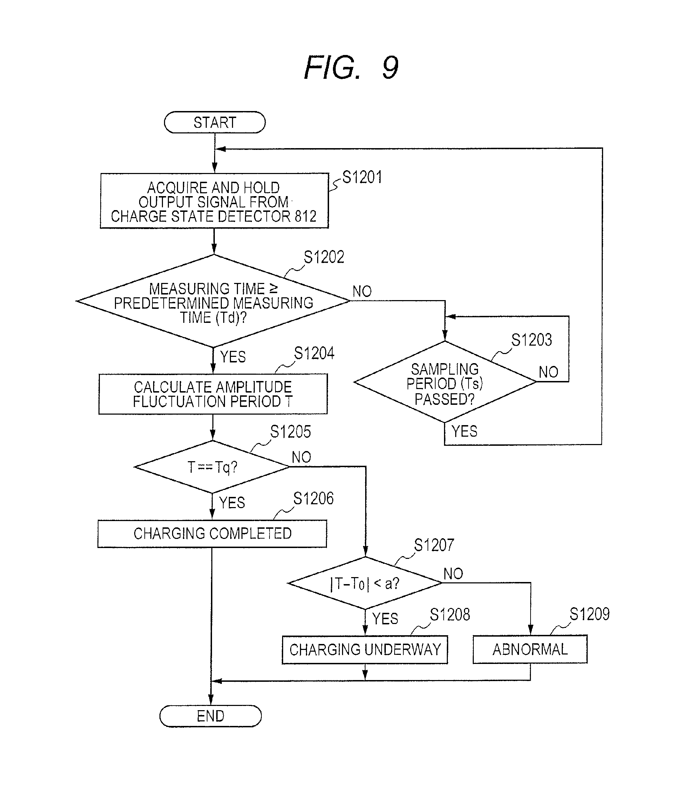

Fig. 9 is a flowchart showing the charge state determination process conducted in the first embodiment.

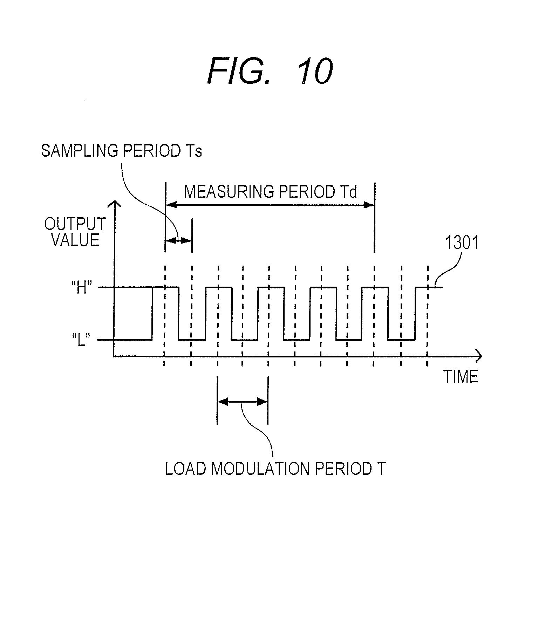

Fig. 10 is a diagram showing a signal waveform of a voltage which the output detector 213 outputs to calculate the load modulation period T.

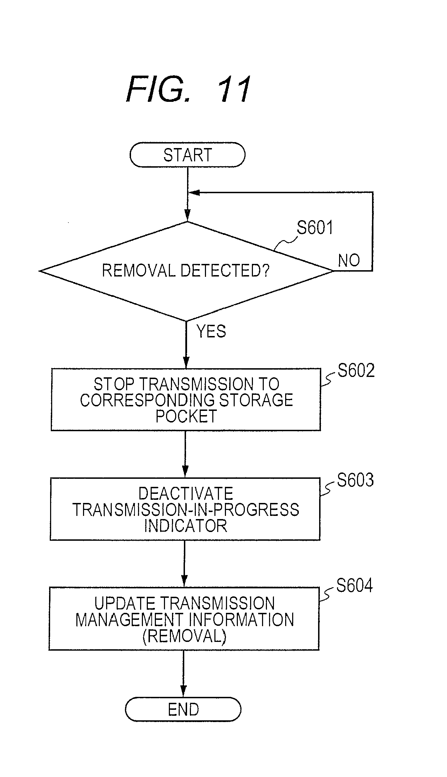

Fig. 11 is a flowchart showing a process of detecting removal of a device from a storage pocket.

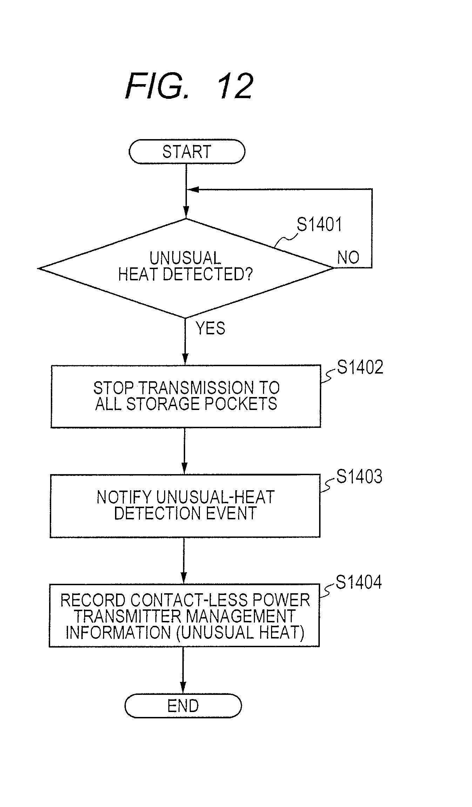

Fig. 12 is a flowchart showing a process of detecting an unusual temperature in the contact-less power transmitting block 10.

The transmission controller 215 in the contact-less power transmitting block 10 controls the elements that constitute the contact-less power transmitting block 10, and the transmission controller 215 performs the power transmission process described below.

When the contact-less power transmitting block 10 starts transmitting power, upon the insertion of an object into any of the storage pockets 11-14 being detected, the transmission controller 215 starts to control the start of power transmission (step S401). The storage detector 216 detects the insertion of the object into the storage pocket 11-14 and outputs an insertion detection signal to the transmission controller 215. The transmission controller 215, upon receiving the insertion detection signal, executes step S402 regarding the object as having been inserted into the storage pocket.

After the reception of the insertion detection signal, the transmission controller 215, in order to determine whether the object that was inserted into the storage pocket is the transmission destination device to which the power is to be transmitted, transmits the power to that storage pocket that has been detected that the inserted object is not the corresponding device and stops power transmission to all other storage pockets (step S402). That is to say, the transmission controller 215, by controlling the switch section 301 shown in Fig. 4, turns on the switch for inducing a current in the resonance element corresponding to the storage pocket of interest, and turns off the switches for inducing a current in the resonance elements corresponding to all other storage pockets. In this way, power is transmitted only to one corresponding storage pocket. This is done to avoid electromagnetic impacts upon other contact-less power receivers.

Next, the transmission controller 215 determines whether the object inserted into the storage pocket is the device to which the power is to be transmitted (step S403). The transmission destination device discrimination process will be illustrated in further detail later referring to Fig. 7.

The transmission controller 215 performs step S405 if the object in the storage pocket is the transmission destination device, that is, the 3D glasses 2, while the transmission controller 215 performs step S407 if the object is not the transmission destination device.

If the object in the storage pocket is determined to be the 3D glasses 2, the transmission controller 215 starts transmitting the power and activating a transmission-in-progress indicator (step S405). More specifically, the transmission controller 215 controls the switch section 301 by generating a switch control signal to induce a current in the resonance element corresponding to the particular storage pocket. The transmission controller 215 refers to the power transmission management table of Fig. 5 to acquire the information relating to the switch for inducing the current in the resonance element corresponding to the particular storage pocket. For example, upon receiving from the storage detector 216 the insertion detection signal indicating that an object has been inserted into storage pocket 11, the transmission controller 215 uses the value "11" of the Pocket No. 901 to refer to the value of the Switch No. 902 and obtain the value "301a" of the Switch No. indicating the switch to be turned on (see Fig. 4). The transmission controller 215 uses the thus-obtained information to output the switch control signal for turning on the switch "a" of the switch section 301, and thus to induce the current in the resonance element 306. In addition, the transmission controller 215 controls the status indicator 217 and activates the LED to indicate that power is being transmitted to the device in the storage pocket 11.

Next, the transmission controller 215 updates the transmission management table in regard to the storage pocket containing the 3D glasses 2, then saves the updated transmission management table in an internal memory (or the like) of the transmission controller 215 (step S406), and resumes the transmission that was stopped in step S402, for all other storage pockets (step S409). This completes the power transmission starting process. The transmission management table provides the information that the transmission controller 215 uses to manage the status of power transmission in each storage pocket. As shown in Fig. 9, the Pocket state 903, the Power transmission state 904, the Charge state 905, and the Transmission starting time 906 are recorded as the transmission management table information. In this example, since power transmission to the 3D glasses 2 has just been started, as displayed in the first record 911 of Fig. 5, the value "1" indicating that the transmission destination device is stored within the pocket is displayed under the field of the Pocket state 903, the value "1" indicating that power is being transmitted is displayed under the field of the Transmission state 904, and the value "1" indicating that charging is underway is displayed under the field of the Charge state 905. Additionally, the transmission controller 215 acquires transmission starting date/time data for each storage pocket from a clock that the controller 215 has, the acquired data is displayed under the field of the Transmission starting time 906, and stores the acquired data under the respective fields.

Conversely if the object that has been inserted into the storage pocket is determined to be an object that is not the transmission destination device, the transmission controller 215 notifies to the user that the object in the storage pocket 11 is not the transmission destination device, by controlling the status indicator 217 and activating, for example, an LED that denotes a warning (step S407). The transmission management table is constructed so that the user can discriminate between the warning and transmission-in-progress LEDs by a color, blinking rate, and/or other factors of the activated LED. For example, the transmission-in-progress state may be represented by blinking at 0.5-second intervals, whereas the warning may be represented by blinking at 1.0-second intervals. The representation in terms of the blinking rate of the LED is effective for reducing the number of parts constituting the status indicator 217, since one LED is only required for one storage pocket. The representation in terms of the color of the LED, on the other hand, would be, for example, "Green" for the transmission-in-progress state and "Red" for the warning. In this case, processing by the transmission controller 215 would be simplified because of blinking control becoming unnecessary.

The transmission controller 215 generates and saves the transmission management table indicating that the storage pocket contains the object to which the power is not to be transmitted (step S408), resumes power transmission to all storage pockets, except for the storage pocket containing the object whose insertion was detected (step S409), and thus completes the power transmission starting process. Here, as displayed in the third record 913 of the transmission management table shown in Fig. 5, the value "2" indicating that an object other than the transmission destination device is stored within the pocket is displayed under the field of the Pocket state 903, the value "0" indicating that no power is being transmitted is displayed under the field of the Transmission state 904, and the value "0" indicating that charging is not underway is displayed under the field of the Charge state 905. Additionally, the transmission controller 215 clears the value of the transmission starting date/time field 906 to zero and stores the value of zero under the respective fields.

Next, the power transmission destination device determination in step S403 of Fig. 6 is described in detail below referring to Fig. 7.

An example in which the transmission destination device detector 813 is composed using a reflection quantity measuring circuit and in which the transmission controller 215 conducts the transmission destination device determination using the transmission rate sent from the transmission destination device detector 813 as the rate between the amount of incident power and that of reflected power, is taken in the description of the present embodiment.

First, the transmission controller 215 acquires the amount of incident power and that of reflected power, from the transmission destination device detector 813 (step S701).

Next, the transmission controller 215 calculates the transmission rate from the acquired amounts of incident power and reflected power (step S702). The transmission rate is a value that how efficiently the amount of incident power has been transmitted to the transmission destination, and this value is expressedas (transmission rate =the amount of incident power/the amount of reflected power). The contact-less power transmission system of the present embodiment is designed so that when the 3D glasses 2, the power transmission destination device, are in the storage pocket, the transmission rate takes a value greater than the predetermined reference value. This means that when the amount of reflected power is small, the contact-less power transmitting block 10 is efficiently transmitting power to the 3D glasses 2, the power transmission destination device.

Next, the transmission controller 215 determines whether the transmission rate is greater than the predetermined reference value (step S703). If transmission rate > reference value, the transmission controller 215 executes step S704. If transmission rate > reference value does not hold, the transmission controller 215 executes step S705. In other words, when the transmission rate is greater than the predetermined reference value, the transmission controller 215 determines that the object in the storage pocket is the 3D glasses 2, the power transmission destination device (step S704).

Conversely when the transmission rate is not greater than the predetermined reference value, the transmission controller 215 determines that the object in the storage pocket is not the power transmission destination device, that is, that the power is not to be transmitted to the object (step S705).

Through the above process, the transmission controller 215 detects the storage pocket into which the power transmission destination device has been inserted, and starts transmitting the power to this device. If the transmission controller 215 detects the presence of an object to which the power is not to be transmitted, the controller 215 does not transmit the power and instead notifies an error to the user. This enhances safety and power-saving property of the digital TV 1 as well as the user's convenience.

Next, a process that the transmission controller 215 of the contact-less power transmitter 10 performs for the 3D glasses in each storage pocket to detect completion of charging is described below.

This charging completion detection process is executed at predetermined time intervals such as several tens of seconds, while the contact-less power transmitter 10 is transmitting power.

First, the transmission controller 215 refers to the Charge state 905 within the transmission management table, then detects, as charging confirmation candidates, any storage pockets corresponding to the value "1" of the Charge state 905 that denotes the fact that charging is underway, and acquires list information containing the storage pockets that are the confirmation candidates (step S501). The transmission controller 215 executes an individual charging confirmation process for each of the storage pockets that are the confirmation candidates, the individual charging confirmation process beginning with step S502.

The transmission controller 215 selects one of the charging confirmation candidates, controls the switch section 301 so that power is only transmitted to the storage pocket containing that charging confirmation candidate, and stops the transmission of power to all other storage pockets currently being charged (step 5502). In this way, power is only transmitted to one storage pocket subjected to charging confirmation. This transmission takes place to avoid any electromagnetic impacts upon other contact-less power receivers.

After that, the transmission controller 215 determines whether the selected charging confirmation candidate is currently being charged or has been charged (step S503). This charge state determination will be detailed later referring to Fig. 9.

If a result of the charge state determination in step S504 indicates that charging is completed, then the process advances to step S505. If the determination result indicates that charging is underway, the process advances to step S506. If an abnormality such as a charging error is detected, the process advances to step S507.

If the charge state determination result indicates that charging is completed, the transmission controller 215 generates, updates, and saves the transmission management table indicating that charging in the storage pocket has been completed (step S505). More specifically, for the corresponding storage pocket number in the transmission management table shown in Fig. 5, the value of the Transmission state 904 is updated to the value "0" indicating that no power is being transmitted, and the value of the Charge state 905 is updated to the value "2" indicating that charging is completed.

If the charge state determination result indicates that charging is completed, the transmission controller 215 refers to a starting time of charging in the corresponding storage pocket, and after calculating a charging time of the storage pocket from a differential relative to the current time of day, compares the calculated charging time with a reference charging completion time that denotes a predetermined completion time of charging (step S506). If the charging time is shorter than the reference charging completion time, the transmission controller 215 executes step S509. If the charging time is not shorter than the reference charging completion time, the transmission controller 215 executes step S507.

If the result of the charge state determination in step S504 indicates that charging is underway and that a charging error is detected, or if the charging time in step S506 is not shorter than the reference charging completion time, since a malfunction in power transmission or trouble with the power-receiving 3D glasses 2 is likely, the transmission controller 215 stops the transmission of the power to the particular storage pocket (step S507). After this, the transmission controller 215 notifies to the user that the charging error has occurred, by, for example, controlling the status indicator 217 and activating an appropriate LED.

Next,the transmission controller 215 generates,updates, and saves the transmission management table indicating that the charging error has occurred in the storage pocket (step S508). More specifically, for the corresponding storage pocket number in the transmission management table shown in Fig. 5, the value of the Transmission state 904 is updated to the value "0" indicating that no power is being transmitted, and the value of the Charge state 905 is updated to the value "3" indicating the occurrence of the charging error.

If charging confirmation has been completed for storage pockets that are the charging confirmation candidates acquired in step S501, step S510 follows (step S509), or if charging confirmation is not yet completed for a part of the storage pockets, steps S502 to S508 are repeated for next pocket that is to be subjected to charging confirmation.

Upon completion of charging confirmation for all storage pockets that are the charging confirmation candidates, the transmission controller 215 refers to the Charge state 905 in the transmission management table and then continues charging by resuming power transmission to the storage pocket corresponding to the charging-underway indicator value "1" of the Charge state 905 (step S510).

Next, the process for determining in Fig. 8 whether the device subjected to charging confirmation has been charged is described in detail below referring to Figs. 9 and 10.

A configuration with a load change demodulation circuit as the charge state detector 812 is taken by way of example in the following description of the present embodiment. That is to say, the load demodulator 254 in the 3D glasses 2 provides load demodulation at a predetermined period while power is supplied from the charging circuit 252 to the secondary battery 253. The load demodulation changes the amount of load power applied from the 3D glasses 2 to the digital TV 1, and thus enables the output detector 213 in the digital TV 1 to detect whether the 3D glasses are being charged or has completed charging.

During this process, the charge state detector 812 has its output signal level sampled for a predetermined time at a predetermined period, and the load demodulation period of the 3D glasses 2 is calculated. If the calculated load demodulation period T is the same as the predetermined load demodulation period To, the 3D glasses 2 are determined to be currently in a charged state. If all changes in amplitude are already removed from the sampled output signal levels of the charge state detector 812, that is, all output levels are H (High) or L (Low), and the load demodulation period T has a value Tq indicating that the changes in amplitude have been removed, then it is determined that charging has been completed. The present embodiment assumes that the predetermined load demodulation period To of the 3D glasses 2 is preset in the transmission controller 215 during shipping.

First, the transmission controller 215 acquires output signal levels from the charge state detector 812 and holds the output signal levels (step S1201).

Next, the transmission controller 215 determines whether it has acquired the output signal levels from the charge state detector 812 for a predetermined measuring time Td, that is, whether the controller 215 has acquired the output signal levels a predetermined number of times (step S1202). If the acquisition has been repeated over the predetermined measuring time Td, the process goes to step S1204, and if the acquisition has not been repeated over the predetermined measuring time Td, the process goes to step S1203. The predetermined measuring time Td is set to be longer than the predetermined load demodulation period To of the 3D glasses 2.

The transmission controller 215 acquires each output signal from the charge state detector 812 at predetermined sampling time intervals Ts (step S1203). The sampling period Ts is set to equal a value satisfying a sampling theorem of the load demodulation period To of the 3D glasses 2, that is, a period satisfying the (sampling period Ts ? load demodulation period T₀/2). After an elapse of a time equivalent to the sampling period Ts, the transmission controller 215 returns to step S1201, in which step the controller 215 then once again acquires output signal levels from the charge state detector 812.

After repeating the acquisition at the sampling period Ts for the predetermined measuring time Td, the transmission controller 215 calculates the load demodulation period T from the acquired output signal levels of the charge state detector 812 (step S1204). If, as shown in Fig. 10, the output levels each alternate between "H" and "L" for each sampling cycle, then it follows that the load demodulation period T = sampling period Ts × 2. In Fig. 10, the sampling period Ts is set to equal the load demodulation period T₀/2. The calculated load demodulation period T therefore becomes the same as the load demodulation period To of the 3D glasses 2. Conversely if all output levels during the sampling period are either "H" or "L", this state is determined to be free from changes in amplitude, with the result that the value Tq indicating that all changes in amplitude have been removed is assigned to the load demodulation period T. The value of Tq is set to be, for example, Td × 5, a longer time than the measuring period Td.

After the above, the charge state is determined from the calculated load demodulation period T (step S1205). If the value of the load demodulation period T is equal to the value Tq indicating that all changes in amplitude have been removed, charging is determined to have been completed (step S1206). If the load demodulation period T is a period falling within a threshold data range with respect to the load demodulation period To of the 3D glasses 2, that is, if Load demodulation period T - Load demodulation period T₀l < Period threshold value á, charging is determined to be underway (step S1208). If this condition is not satisfied, since a malfunction in either the 3D glasses 2 or the contact-less power transmitting block 10 of the digital TV 1 is likely, abnormality is determined to have been detected (step S1209).

A signal waveform of a voltage value which the output detector 213 outputs to calculate the load modulation period T appears as shown in Fig. 10.

Avertical axis in the figure denotes changes in the voltage output level of the output detector 213, and a horizontal axis denotes an elapse of time. The waveform 1301 represents the output signal level from the charge state detector 812. The transmission controller 215 acquires the output signal level in cyclic timing shown as a discontinuous line. The sampling period at which the transmission controller 215 acquires the output signal level is denoted as Ts, and the measuring period is denoted as Td. The load demodulation period that has been calculated from the measured data is denoted as T.

Referring to Fig. 10, the output level alternates between "H" and "L" for each sampling cycle. The load demodulation period T can therefore be calculated using the expression of (sampling period Ts × 2). If the output level changes in the form of "H", "H", "L", "L", since a half period becomes the (sampling period Ts × 2), the load demodulation period T becomes the (sampling period Ts × 2) × 2.

Through the above process, the transmission controller 215 detects the completion of charging of the 3D glasses 2, stops the transmission of power to the storage pocket containing the charged 3D glasses 2, and thus enhances the safety and power-saving property of the digital TV 1.

While the example in which the charge state detector 812 is composed using a load change demodulation circuit has been taken in Fig. 10 in the description of the charge state determination process, the load change demodulation circuit may be replaced by any other appropriate type of circuit such as a reflection quantitymeasuring circuit. If this type of circuit is used, the transmission controller 215 will be designed so that the controller 215 uses substantially the same logic as that of Fig. 7 to calculate, via the charge state detector 812, the transmission rate between the amount of incident power in the contact-less power receiving block 250 of the 3D glasses 2 and the amount of reflected power returned from there. And then, if the calculated transmission rate is greater than the predetermined reference value, continue the charging of the 3D glasses 2 in the storage pocket corresponding to the transmitting circuit 214, or if the transmission rate is not greater than the predetermined reference value, complete the charging.

Next, a process of detecting removal of a device from a storage pocket in the present embodiment is described below referring to Fig. 11.

First, the storage detector 216, upon detecting removal of an obj ect from a storage pocket (step S601), outputs a removal detection signal to the transmission controller 215. The transmission controller 215 then receives the removal detection signal and executes step S602.

Next, the transmission controller 215 refers to the Charge state 905 in the transmission management table that corresponds to the storage pocket. If the Charge state 905 exhibits the value "1" indicating that transmission is in progress, the transmission controller 215 generates the control signal for turning off the switch corresponding to the value which has been acquired from the information under the field of the Switch No. 902, and outputs the control signal to the switch control signal terminal 313. This stops the supply of power to the excitation element in the storage pocket that is to receive the power (step S602).

The transmission controller 215 that has stopped the transmission of the power to the storage pocket controls the status indicator 217 and deactivates the LED indicating the transmission of the power to the storage pocket (step 603).

The transmission controller 215 generates, updates, and saves the transmission management table denoting that the object has been removed from the storage pocket (step S604). Upon the removal of the object, the transmission management table is returned to its initial state. That is to say, for the corresponding storage pocket, the Pocket state 903 returns to the value "0" indicating an empty state, the Transmission state 904 returns to the value "0" indicating that no power is being transmitted, and the Charge state 905 returns to the value "0" indicating a stopped state. The Transmission starting time 906 is updated by being cleared back to zero.

Through the above process, the transmission controller 215 detects the removal of the object from the storage pocket and if power transmission is in progress, stops the transmission to the storage pocket. This prevents the power from being transmitted to an empty storage pocket, and thus enhances the safety and power-saving property of the digital TV 1.

Next, a process of detecting an unusual temperature in the contact-less power transmitting block 10 is described below referring to Fig. 12.

The temperature detector 811 in the contact-less power transmitting block 10 here, monitors the temperature of the amplifying circuit 212 and detects weather the temperature is normal or unusual temperature of high temperature state, then outputs the result to the transmission controller 215.

The temperature detector 811 monitors the temperature of the amplifying circuit 212 and if an unusually high temperature is detected, outputs an unusually-high-temperature detection signal to the transmission controller 215 (step S1401). The transmission controller 215 receives the unusually-high-temperature detection signal and then executes step S1402.

Upon receiving the unusually-high-temperature detection signal, the transmission controller 215 generates a control signal for turning off all switches (301a to 301d) of the switch section 301 and outputs the control signal to the switch control signal terminal 313 in order to stop all the power-transmitting operation of the transmitting circuit 214 (step S1402). This stops the supply of power to those excitation elements of all storage pockets which are to receive the power.

Next, the transmission controller 215 notifies to the user that the controller 215 has detected the unusually high temperature (step S1403). The controller may activate the appropriate LED, give off a warning sound, or use other means, to conduct the notification.

The transmission controller 215 also generates management information that indicates that unusual heat has occurred, and updates and saves the management information (step S1404). The management information indicating the occurrence of the unusual heat is retained as a contact-less power-transmitting block management table separately from the transmission management table of the storage pockets that is described in Fig. 5. The contact-less power-transmitting block management table relates to the entire contact-less power transmitting block 10. Although not shown in Fig. 5, information on past abnormal states of the entire contact-less power transmitting block 10 and on the time of day when each abnormal state occurred is retained in the contact-less power-transmitting block management table. The abnormal states mean "unusual heat", a "transmission failure" indicating that for one reason or another the transmitting circuit failed to transmit power, and other abnormalities. The transmission controller 215, by retaining the contact-less power-transmitting block management table in addition to the transmission management table shown in Fig. 5, can acquire the state information as to from which storage pocket information on abnormal states was being transmitted when abnormality occurred, and readily locate a source of the abnormality.

As described above, power transmission to all storage pockets is stopped upon the detection of the unusually high temperature. This enhances the safety of the digital TV 1 being used.

In the manner described above, whether the object in the storage pocket of interest is the 3D glasses that is the power transmission destination device, whether charging has been completed, and whether the power transmission destination device has been removed from the storage pocket are determined in the present embodiment and the determination can be implemented by merely controlling the digital TV 1. This enables the provision of the contact-less power transmitter (digital TV), contact-less power receivers, and contact-less power transmission system not requiring a communications unit or control unit at the power-receiving contact-less power receiver (3D glasses) side. The present embodiment is therefore effective in that it contributes to reducing the contact-less power receivers in dimensions and weight, and even in price.

### Second Embodiment

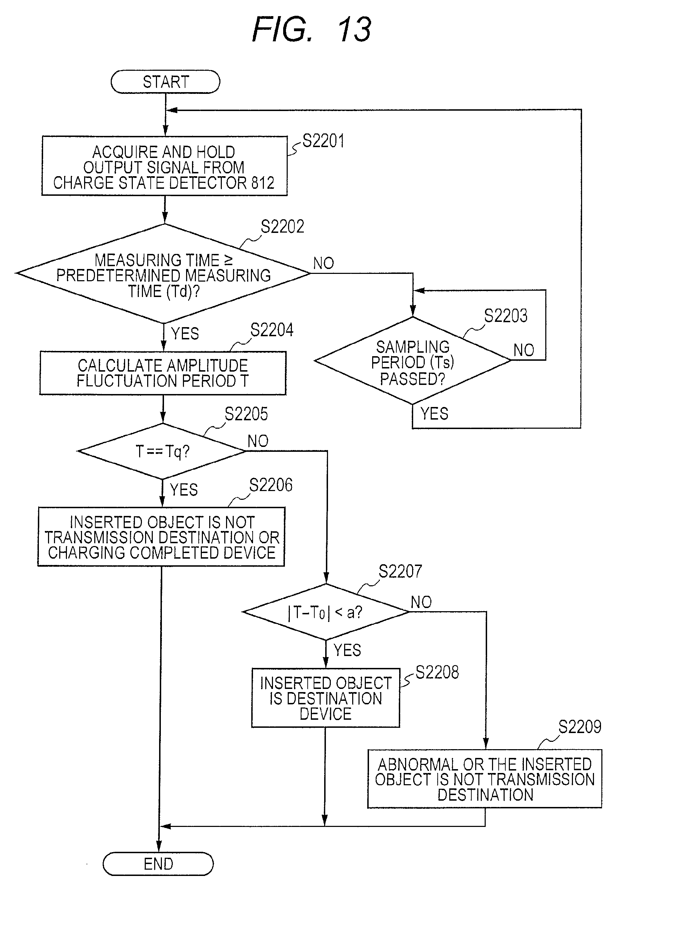

Hereunder, a contact-less power transmission system according to a second embodiment of the present invention will be described referring to Fig. 13.

Fig. 13 is a flowchart showing a charge state determination process conducted in the second embodiment.

The contact-less power transmission system of the present embodiment is similar to that of the first embodiment in that the system includes a digital TV having a 3D content display capability, as a contact-less power transmitter, and 3D glasses as contact-less power receivers.

The example in which, in order to determine in step S403 of Fig. 6 whether the object in the storage pocket is the power transmission destination device, the transmission destination device detector 813 is composed using a reflection quantity measuring circuit, and in which the transmission rate sent from the transmission destination device detector 813 as the rate between the amount of incident power and that of reflected power, has been taken in the description of the first embodiment.

In the second embodiment, a transmission destination device detector 813 is composed using a load change demodulation circuit, and while electric power is supplied from a charging circuit 252 to a secondary battery 253, a load modulator 254 in 3D glasses 2 provides load modulation at predetermined periods and compares each period to determine whether an object in a corresponding storage pocket is a power transmission destination device.

Principles are substantially the same as those of the process for determining in the first embodiment whether the obj ect to be subjected to charging confirmation is in a charged state. In addition, output signal levels that Fig. 10 in the following description shows mean the same as the output values from the transmission destination device detector 813.

As in the first embodiment, a modulation period of the load modulator 254 in the 3D glasses 2 is taken as To, a modulation period calculated by the transmission destination device detector 813 is taken as T, a sampling period is taken as Ts, and a predetermined measuring time is taken as Td. The present embodiment also assumes that, for the load modulator 254, the modulation period To, the sampling period Ts, and the predetermined measuring time Td are given beforehand.

In this case, the process for determining in step S403 of Fig. 6 in the first embodiment whether the object in the storage pocket is the device to which power is to be transmitted is conducted as follows:
First, a transmission controller 215 acquires output signal levels from the transmission destination device detector 813 and holds the output signal levels (step S2201).

Next, the transmission controller 215 determines whether it has acquired the output signal levels from the transmission destination device detector 813 for the predetermined measuring time Td, that is, whether the controller 215 has acquired the output signal levels a predetermined number of times (step S2202). If the acquisition has been repeated over the predetermined measuring time Td, the process goes to step S2204, and if the acquisition has not been repeated over the predetermined measuring time Td, the process goes to step S2203. The predetermined measuring time Td is set to be longer than the load demodulation period To of the 3D glasses 2.

The transmission controller 215 acquires each output signal from the transmission destination device detector 813 at the predetermined sampling time intervals Ts (step S2203). The sampling period Ts is set to equal a value satisfying a sampling theorem of the load demodulation period To of the 3D glasses 2, that is, a period satisfying the (sampling period Ts ? load demodulation period T₀/2). After an elapse of a time equivalent to the sampling period Ts, the transmission controller 215 returns to step S2201, in which step the controller 215 then once again acquires output signal levels from the transmission destination device detector 813.

### [0164s]

After repeating the acquisition at the sampling period Ts for the predetermined measuring time Td, the transmission controller 215 calculates the load demodulation period T from the acquired output signal levels of the charge state detector 812 (step S2204). If, as shown in Fig. 10, the output levels each alternate between "H" and "L" for each sampling cycle, then it follows that the load demodulation period T = sampling period Ts x 2. In Fig. 10, the sampling period Ts is set to equal the load demodulation period T₀/2. The calculated load demodulation period T therefore becomes the same as the load demodulation period To of the 3D glasses 2. Conversely if all output levels during the sampling period are either "H" or "L", this state is determined to be free from changes in amplitude, with the result that a value Tq indicating that all changes in amplitude have been removed is assigned to the load demodulation period T. The value of Tq is set to be, for example, Td x 5, a longer time than the measuring period Td.

After the above, whether the object in the storage pocket is the transmission destination device is determined from the calculated load demodulation period T (step S2205). If the value of the load demodulation period T is equal to the value Tq indicating that all changes in amplitude have been removed, the object in the storage pocket is determined to be not the transmission destination device or the transmission destination device whose charging has been completed (step S2206). If the load demodulation period T is a period falling within a threshold data range with respect to the load demodulation period To of the 3D glasses 2, that is, if Load demodulation period T - Load demodulation period T₀| < Period threshold value á, the object in the storage pocket is determined to be the transmission destination device (step S2208). If this condition is not satisfied, since a malfunction in either the 3D glasses 2 or the contact-less power transmitting block 10 of the digital TV 1 is likely, abnormality is determined to have been detected (step S2209).

### Third Embodiment

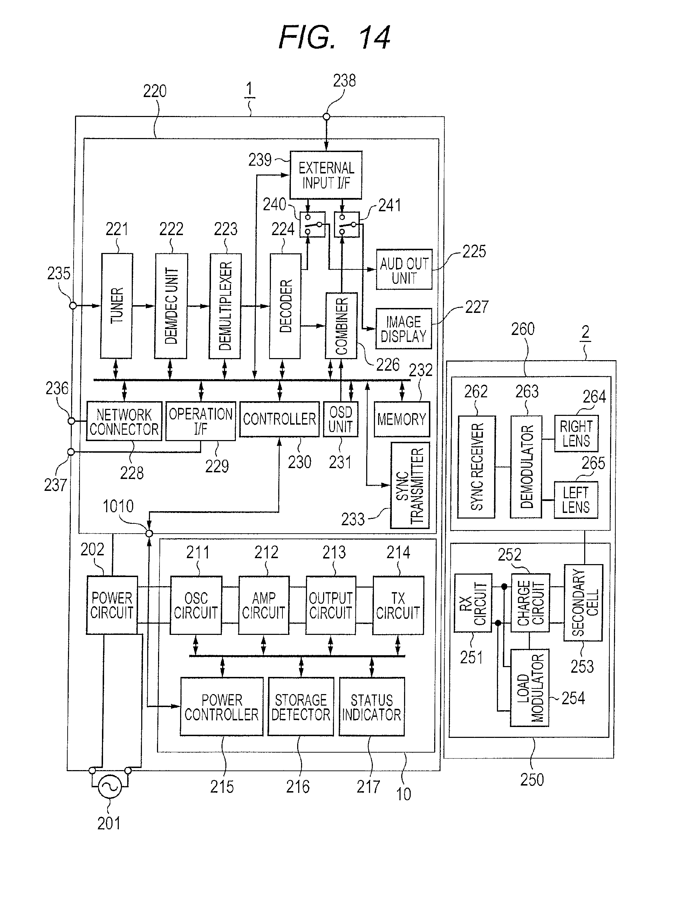

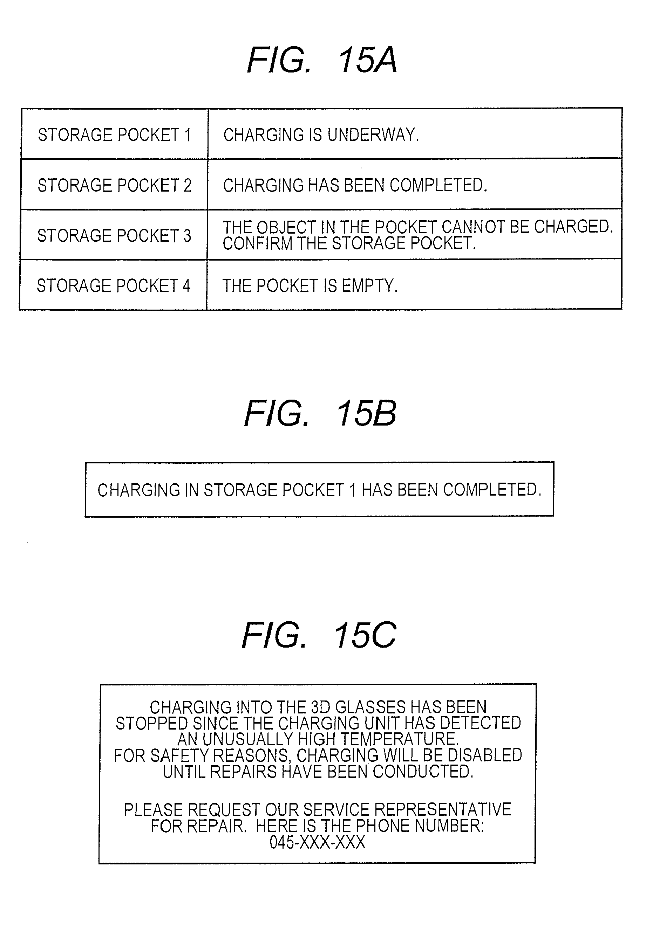

Hereunder, a contact-less power transmission system according to a third embodiment of the present invention will be described referring to Figs. 14 and 15.

The contact-less power transmission system of the present embodiment is similar to that of the first embodiment in that the system includes a digital TV having a 3D content display capability, as a contact-less power transmitter, and 3D glasses as contact-less power receivers. Means for transmitting electric power in non-contact form is also substantially the same in composition.

The description of the present third embodiment focuses primarily upon differences from the first embodiment.

The present embodiment uses an image signal receiving/reproducing block 220 of the digital TV 1 to display a state of power transmission to, and a charge state of, the 3D glasses that are the contact-less power receivers.

First, a configuration of the contact-less power transmission system according to the third embodiment of the present invention is described below referring to Fig. 14.

Fig. 14 is a block diagram showing a configuration of various elements constituting the contact-less power transmission system according to the third embodiment of the present invention.

As shown in Fig. 14, in the contact-less power transmitting block 10 of the digital TV 1 according to the present embodiment, the image signal receiving/reproducing block 220 is connected at its controller 230 to a transmission controller 215 of the contact-less power transmitting block 10 via a communications interface (I/F) 1010.

The controller 230 executes application software for presenting a charge state to a user, generates a screen for notifying the charge state to the user, and supplies the screen to the user by displaying this screen on an image display 227.

Charge state information that indicates the charge state is composed of power transmission management table fields such as Pocket No. , Pocket state, and Charge state. The transmission controller 215 transmits an event message in response to a request from the controller 230 or if the transmission controller 215 detects a change in state. The change in state indicates, for example, that completion of electrical charging has been detected or that abnormality of the contact-less power transmitting block 10 has been detected.

Next, a user interface for displaying charge states to the user is described below referring to Figs. 15A-15C.

Figs. 15A-15C are diagrams that show examples of a screen for displaying the charge states to the user.

Example of Fig. 15A displays the states for each of storage pockets, example of Fig. 15B displays a change in state of a specific storage pocket, and example of Fig. 15C displays a warning on the abnormality of the contact-less power transmitting block 10.

When the display of a charge state is requested by the user's remote control operations, the controller 230 requests the transmission controller 215 for information on the charge state and uses the information to generate and display the screen for presenting the charge state. At this time, as shown in example of Fig. 15A, the information denoting the charge states or errors for each storage pocket is displayed in the form of a sentence or statement.

In addition, the transmission controller 215, upon detecting the completion of charging or detecting occurrence of a charging error, notifies these detections to the controller 230 in the form of event messages. The controller 230 creates an appropriate dialog, as in example of Fig. 15B, according to contents of the received message, and displays the dialog to the user. Thus, the user can immediately know the completion of charging or the occurrence of the error, without voluntarily or autonomously confirming these events.

Furthermore, even in case of an unrecoverable, unusual event being detected, an event that immediate repairs are necessary can be notified to the user in the form of a dialog, as in example of Fig. 15C, in response to an event message indicating that the transmission controller 215 has detected an unusually high temperature.

As described above, in addition to beneficial effects equivalent to those of the first embodiment, the third embodiment offers greater convenience in system usage since the system presents the charge state within the storage pocket by displaying this charge state on the image display 227.

### Fourth Embodiment

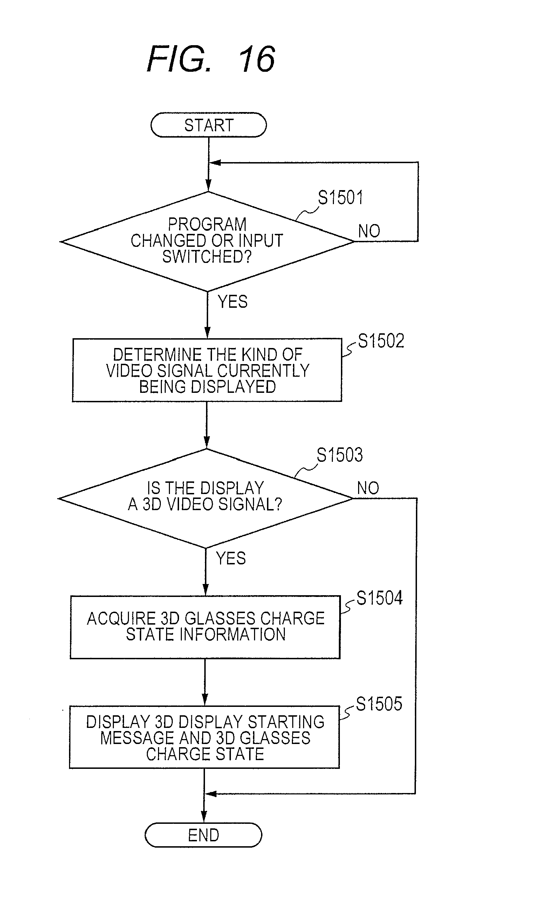

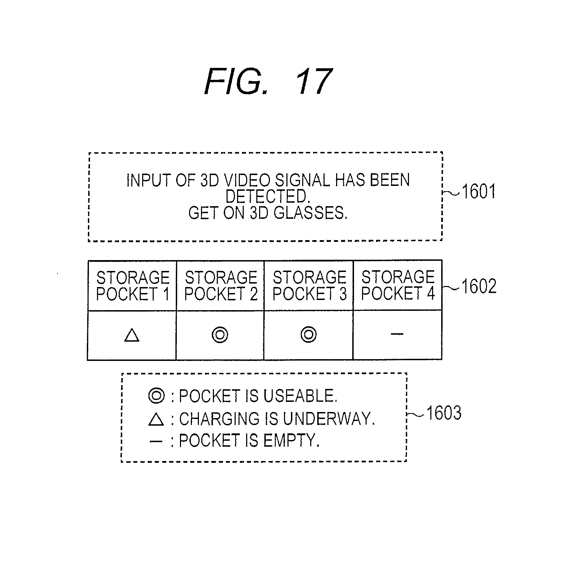

Hereunder, a contact-less power transmission system according to a fourth embodiment of the present invention will be described referring to Figs. 16 and 17.

The contact-less power transmission system of the present embodiment is similar to those of the first embodiment and the third embodiment in that the system includes a digital TV having a 3D content display capability, as a contact-less power transmitter, and 3D glasses as contact-less power receivers. In addition, the present embodiment is the same as the third embodiment in that an image signal receiving/reproducing block 220 is connected at its controller 230 to a transmission controller 215 of a contact-less power transmitting block 10 via a communications interface (I/F) 1010.

Furthermore, in the present embodiment, the image signal receiving/reproducing block 220 of the digital TV 1 detects the kind of image displayed by the image signal receiving/reproducing block 220 and displays a charge state of the 3D glasses in coordination with the contact-less power transmitting block.

When the image signal receiving/reproducing block 220 detects reception of a 3D TV broadcast or visually detects that video content that has been input from an external input terminal 238 is 3D content, the present embodiment displays the charge state of the 3D glasses of the contact-less power receivers.

First, a process by the image signal receiving/reproducing block 220 is described below referring to Figs. 16 and 17.

Fig. 16 is a flowchart of the process by the image signal receiving/reproducing block 220 which displays a state of 3D glasses on a display device in response to a reception of the 3D image.

Fig. 17 is a diagram showing an example of a screen for presenting the charge state of the 3D glasses to a user during 3D image display on the digital TV.

First, the controller 230 of the image signal receiving/reproducing block 220 monitors for a change in the kind of broadcast program that a decoder 224 receives, or for other events such as input signal switching (step S1501), and conducts step S1502 after detecting any such event.

The controller 230 then determines whether the video signal displayed on the image display 227 is 3D content (step S1502).

For example, if the displayed program is an MPEG2-TS broadcast program, the controller 230 uses a 2D/3D video identification signal contained in "user_data" of an MPEG-2 Video picture layer, wherein "user_data" has Stereo_Video_Format_Signaling and can conduct a 2D/3D video discrimination with Stereo_Video_Format_Signaling_type that is seven-bit information which constitutes Stereo_Video_Format_Signaling. If the seven-bit information in Stereo_Video_Format_Signaling_type is "0000011", the video signal is 3D (3D Side-by-Side video). If the seven-bit information is "0001000", the video signal is 2D.

During display of a video signal that has been input to an external input I/F 239, if the external input I/F 239 is an interface of the HDMI (High-Definition Multimedia Interface (registered trademark) standards), an HDMI Vendor-Specific InfoFrame is transmitted, the HDMI Vendor-Specific InfoFrame being used to transmit disabling-information using TMDSN (Transition Minimized Differential Signaling) which sends video/audio data. The HDMI Vendor-Specific InfoFrame has three-bit data of HDMI_Video_Format, this data enabling the controller 230 to determine whether the video signal is 3D or others. If the three bits are "010", the video signal is 3D.

If a result of the determination in step S1503 indicates that the video signal is 3D, the process goes to step S1504. If the video signal is determined not to be 3D, the process is terminated.

Upon determining the video signal to be 3D, the controller 230 requests the transmission controller 215 of the contact-less power transmitting block 10 via the communications interface (I/F) 1010 to transmit charge state information to the controller 230. The charge state information includes Pocket No., Pocket state, Charge state, and other elements of a power transmission management table (see Fig. 5). The transmission controller 215 generates the charge state information from management information that the controller 215 retains, such as the transmission management table. After the generation of the charge state information, the transmission controller 215 transmits the information to the controller 230.

Upon acquiring the charge state information (step S1505), the controller 230 uses the acquired information to generate a screen for notifying the user of the charge state of the 3D glasses, and then displays this charge state. For example, as shown in Fig. 17, the controller 230 presents a Charge state 1602 of the 3D glasses, for each storage pocket, along with a message 1601 indicating that 3D video signal data will be displayed. Although the Charge state 1602 represents the charge state using an icon such as a small triangle or double circle, the charge state may be presented in a character format, as in example of Fig. 15A. The representation in the icon format is expected to offer an effect that the charge state can be readily recognized. A message 1603 is an explanation of icons.

In the above-described configuration, in a case that the display of a 3D video signal is started, or that the received video signal is 3D, or that the video signal that has been input is 3D, the user can confirm the charge states of each 3D glasses pair and easily know which of the 3D glasses pairs is useable.

While the present embodiment has been described taking the example in which the contact-less power receivers are 3D glasses, the present invention may also be applied to other devices. When the image signal receiving/reproducing block 220 of the digital TV 1 detects execution of a desired function of one contact-less power receiver, effects equivalent to those of the first embodiment, for example, can be obtained by requesting the transmission controller 215 for appropriate charge state information and displaying the charge state.

As described above, in addition to the beneficial effects equivalent to those of the first embodiment, the fourth embodiment offers greater convenience in system usage since the system presents the charge state by displaying this charge state on the image display 227 when the digital TV displays the content that uses the contact-less power receiver (3D glasses).

### Effects of the Invention that can be Understood from the Embodiments

As set forth in the above embodiments, the present invention provides a contact-less power transmission system that conducts non-contact charging of a device, the system being adapted to discriminate the kind of device not to be charged, at a device that operates as a charging power supply, and conduct power control, and to contribute to simplifying a structure of the device not to be charged, and thus reducing dimensions and weight of the device not to be charged.

## Claims

1. A contact-less power transmitter, comprising:
a transmitting circuit for transmitting electric power to at least one contact-less power receiver in non-contact fashion;
at least one storage pocket for accommodating one of the contact-less power receivers;
a storage detector for detecting insertion of an object into one of the storage pockets;
an output detector for determining whether the object inserted in the storage pocket is the contact-less power receiver to which the power is to be transmitted; and
a transmission controller for controlling the transmission of the power from the transmitting circuit;
wherein:
the transmitting circuit includes an excitation element and a resonance element, both corresponding to each of the storage pockets, and under a control signal from the transmission controller, transmits the power from one storage pocket specified by the transmission controller; and
the transmission controller, upon the storage detector detecting the insertion of the object, uses information from the output detector to determine whether the object is the contact-less power receiver to which the power is to be transmitted, and upon the object being determined to be the contact-less power receiver, controls the transmitting circuit to transmit the power from the corresponding storage pocket.

2. The contact-less power transmitter according to claim 1, wherein:
the contact-less power receiver includes a receiving circuit for receiving the power,
a charging circuit for charging a secondary battery by supplying the power already received by the receiving circuit to the secondary battery,
thesecondarybatteryforaccumulatingthesuppliedpower,
and
a load modulator for conducting load modulation at a first period while the power is supplied from the charging circuit to the secondary battery;
the output detector measures, for a predetermined time, a second period of load modulation induced at the transmitting circuit side as a result of the load modulation conducted by the load modulator in the contact-less power receiver; and
the transmission controller calculates a difference between the first period of the load modulator and the second period of the load modulation in the transmitting circuit corresponding to the storage pocket containing the object whose insertion was detected, and if the difference is smaller than a predetermined reference value, determines that the object whose insertion was detected is the device to which the power is to be transmitted.

3. The contact-less power transmitter according to claim 2, wherein:
when the transmission controller determines whether the object inserted in the storage pocket is the device to which the power is to be transmitted, the transmission controller instructs only the transmitting circuit of the corresponding storage pocket to transmit the power and instructs the transmitting circuits of all other storage pockets to stop transmitting the power.

4. The contact-less power transmitter according to claim 1, wherein:
the transmission controller acquires both the amount of incident power, measured by the output detector as the amount of power admitted from the contact-less power transmitter into the contact-less power receiver, and the amount of reflected power returned from the contact-less power receiver to the contact-less power transmitter, then calculates a rate of the amount of incident power to the amount of reflected power, as a transmission rate, and if the transmission rate is greater than a predetermined reference value, determines that the object whose insertion was detected is the device to which the power is to be transmitted.

5. The contact-less power transmitter according to claim 4, wherein:
when the transmission controller determines whether the object inserted in the storage pocket is the device to which the power is to be transmitted, the transmission controller instructs only the transmitting circuit of the corresponding storage pocket to transmit the power and instructs the transmitting circuits of all other storage pockets to stop transmitting the power.

6. The contact-less power transmitter according to claim 1, wherein:
the contact-less power receiver includes
a receiving circuit for receiving the power,
a charging circuit for charging a secondary battery by supplying the power already received by the receiving circuit to the secondary battery,
thesecondarybatteryforaccumulatingthesuppliedpower,
and
a load modulator for conducting load modulation at a first period while the power is supplied from the charging circuit to the secondary battery, and
measures, for a predetermined time, a second period of load modulation induced at the transmitting circuit side as a result of the load modulation conducted by the load modulator in the contact-less power receiver; and
the transmission controller calculates a difference between the first period of the load modulator and the second period of the load modulation in the transmitting circuit instructed to transmit the power, then if the difference is not smaller than a predetermined reference value, determines that the charging of the contact-less power receiver inserted in the storage pocket corresponding to the transmitting circuit has been completed, and stops the power transmission of the transmitting circuit.

7. The contact-less power transmitter according to claim 6, wherein:
when the transmission controller determines whether the charging of the contact-less power receiver inserted in the storage pocket corresponding to the transmitting circuit has been completed, the transmission controller instructs only the transmitting circuit of the corresponding storage pocket to transmit the power and instructs the transmitting circuits of all other storage pockets to stop transmitting the power.

8. The contact-less power transmitter according to claim 1, wherein:
the transmission controller acquires both the amount of incident power, measured by the output detector as the amount of power admitted from the contact-less power transmitter into the contact-less power receiver, and the amount of reflected power returned from the contact-less power receiver to the contact-less power transmitter, then calculates a rate of the amount of incident power to the amount of reflected power, as a transmission rate, and if the transmission rate is not greater than a predetermined reference value, determines that the charging of the contact-less power receiver inserted in the storage pocket corresponding to the transmitting circuit has been completed, and stops the power transmission of the transmitting circuit.

9. The contact-less power transmitter according to claim 8, wherein:
when the transmission controller determines whether the charging of the contact-less power receiver inserted in the storage pocket corresponding to the transmitting circuit has been completed, the transmission controller instructs only the transmitting circuit of the corresponding storage pocket to transmit the power and instructs the transmitting circuits of all other storage pockets to stop transmitting the power.

10. A contact-less power transmission system for transmitting electric power to a contact-less power transmitter and at least one contact-less power receiver in non-contact fashion, wherein:
the contact-less power transmitter includes
a transmitting circuit for transmitting the power to the at least one contact-less power receiver in non-contact fashion,
at least one storage pocket for accommodating the at least one contact-less power receiver,
a storage detector for detecting insertion of an object into the at least one storage pocket,
an output detector for, upon determining whether the object inserted in the storage pocket is the contact-less power receiver to which the power is to be transmitted, detecting a charge state of the contact-less power receiver,
a transmission controller for controlling the transmission of the power from the transmitting circuit, and
a display section for displaying the charge state of the contact-less power receiver;
the transmitting circuit includes an excitation element and a resonance element, both corresponding to each of the storage pockets, and under a control signal from the transmission controller, transmits the power from the storage pocket specified by the transmission controller;
the transmission controller, upon the storage detector detecting the insertion of the object, uses the output detector to determine whether the obj ect is the contact-less power receiver to which the power is to be transmitted, and upon the object being determined to be the contact-less power receiver, controls the transmitting circuit to transmit the power from the corresponding storage pocket; and
the transmission controller further receives charge state information from the output detector and makes a display section display the charge state of the contact-less power receiver in the storage pocket.

11. The contact-less power transmission system according to claim 10, wherein:
the contact-less power receiver includes
a receiving circuit for receiving the power,
a charging circuit for charging a secondary battery by supplying the power already received by the receiving circuit to the secondary battery,
thesecondarybatteryforaccumulatingthesuppliedpower,
and
a load modulator for conducting load modulation at a first period while the power is supplied from the charging circuit to the secondary battery;
the output detector measures, for a predetermined time, a second period of load modulation induced at the transmitting circuit side as a result of the load modulation conducted by the load modulator in the contact-less power receiver; and
the transmission controller calculates a difference between the first period of the load modulator and the second period of the load modulation in the transmitting circuit corresponding to the storage pocket containing the object whose insertion was detected, and if the difference is smaller than a predetermined reference value, determines that the obj ect whose insertion was detected is the device to which the power is to be transmitted.

12. The contact-less power transmission system according to claim 10, wherein:
the transmission controller acquires both the amount of incident power, measured by the output detector as the amount of power admitted from the contact-less power transmitter into the contact-less power receiver, and the amount of reflected power returned from the contact-less power receiver to the contact-less power transmitter, then calculates a rate of the amount of incident power to the amount of reflected power, as a transmission rate, and if the transmission rate is not greater than a predetermined reference value, determines that the charging of the contact-less power receiver inserted in the storage pocket corresponding to the transmitting circuit has been completed, and stops the power transmission of the transmitting circuit.

13. A digital television system comprising:
a digital television for receiving and reproducing three dimensional video data; and
pairs of three dimensional glasses, each pair being used to view the three dimensional video data being reproduced;
wherein:
the digital television includes
an image signal receiving/reproducing block and
a contact-less power transmitter for transmitting electric power to one of the three dimensional glasses pairs in non-contact fashion;
the image signal receiving/reproducing block includes a controller and
a display section for displaying a storage pocket state and a charge state of one of the three dimensional glasses pairs;
the contact-less power transmitter includes
a transmitting circuit for transmitting the power to at least one of the three dimensional glasses pairs in non-contact fashion,
at least one storage pocket for accommodating one pair of three dimensional glasses,
a storage detector for detecting insertion of an object into the at least one storage pocket,
an output detector for determining whether the object inserted in the storage pocket is the three dimensional glasses to which the power is to be transmitted, the output detector further detecting the charge state of the three dimensional glasses, and
a transmission controller for controlling the transmission of the power from the transmitting circuit;
the transmitting circuit includes an excitation element and a resonance element, both corresponding to each of the storage pockets, and under a control signal from the transmission controller, transmits the power from one storage pocket specified by the transmission controller;
the transmission controller, upon the storage detector detecting the insertion of the object, uses information from the output detector to determine whether the object is the three dimensional glasses to which the power is to be transmitted, and upon the object being determined to be the three dimensional glasses, controls the transmitting circuit to transmit the power from the corresponding storage pocket; and
upon the image signal receiving/reproducing block determining whether the received video signal data is three dimensional video signal data and then determining that the received signal data is three dimensional video signal data, the controller makes the display section display the state of the storage pocket and the charge state of the three dimensional glasses pair.
